# EUROPEAN PATENT SPECIFICATION

(11) **EP 4 198 929 B1**
(45) Date of publication and mention of the grant of the patent: **31.01.2024**
(21) Application number: 21461636.9
(22) Date of filing: 16.12.2021
(51) Int. Cl.: G07C 9/10, G07C 9/27

(54) **A SYSTEM FOR CONTROLLING A PARKING SPACE BARRIER AND A METHOD FOR CONTROLLING A PARKING SPACE BARRIER**
EIN SYSTEM ZUR STEUERUNG EINER PARKRAUMSCHRANKE UND EIN VERFAHREN ZUR STEUERUNG EINER PARKRAUMSCHRANKE
SYSTÈME DE COMMANDE D'UNE BARRIÈRE DE PLACE DE STATIONNEMENT ET PROCÉDÉ DE COMMANDE D'UNE BARRIÈRE DE PLACE DE STATIONNEMENT

(43) Date of publication of application: 21.06.2023
(73) Proprietor: Blokado Sp. z o. o., 00-839 Warszawa (PL)
(72) Inventor: Foksa, Artur, 02-972 Warszawa (PL); Wnuk, Pawel, 05-509 Jozefoslaw (PL); Syfert, Michal, 02-553 Warszawa (PL)
(74) Representative: AOMB Polska Sp. z.o.o.

(56) References cited:
- US-A1- 2018 061 145
- US-A1- 2020 153 631
- US-A1- 2021 043 021

## Description

### Technical field

The object of the invention is a solution related to an intelligent system for controlling a along parking space barrier with a method for controlling a parking space barrier in such a system.

### Background art

From prior art, there are several known solutions related to paid parking systems based on intelligent parking bollards.

US Patent Application No. US2018061145A1 relates to a system of managing a parking space, comprising: a) a server for managing and controlling the access of vehicles into the parking space; b) at least one beacon associated with a passage gate at a passage point for transmitting a wireless signal(s); c) an access control module adapted to open/close said passage gate and accordingly to notify the state of said passage gate; and d) a user terminal communication device adapted to receive and identify said wireless signals, and accordingly to notify said server and/or said access control module upon the identification of said at least one beacon, thereby enabling said server and/or said access control module to perform parking related tasks.

Another US Patent Application No. US2020153631A1 discloses an access control system which relies at least in part on a non-networked path for permitting an entity access to a secured location; the entity identified by the system by means of a unique entity identifier accorded the entity; entry to said secured location secured by a barrier; said barrier identified by the system by means of a unique barrier identifier accorded the barrier; said system including a local access unit located local to the barrier; said system including a barrier controller for actuation of the barrier; said local access unit issuing an open signal to the barrier controller whereby the barrier permits the entity access to the secured location if and only if data contained in a token communicated from an un-trusted communications device to the local access unit is verified by the local access unit with respect to at least a first parameter by the local access unit.

Yet another US Patent Application No. US2021043021A1 is directed to a vehicle authorization system for a parking facility. The system includes a gate assembly and a communication system. The gate assembly includes a gate, a gate actuator configured to move the gate, and a gate controller that receives and transmits wireless long range signals. The gate controller is configured to actuate the gate actuator to move the gate. The communication system includes a remote server computing device that is positioned offsite of the parking facility and a gateway device positioned at the parking facility and communicatively coupled to the gate controller and to the remote server computing device. The remote server computing device provides the wireless long range signals to the gate controller via the gateway device such that a construction material of the parking facility and the housing of the gate assembly minimally interferes with the wireless long range signals.

The international patent application published as WO2021086299A1 describes a system for monitoring and controlling public paid parking spaces. The solution comprises an operating terminal, a telephone application, a server connecting to the terminal, a method for locking parking spaces, and it can additionally comprise a module utilised to charge electric cars. Unlike the present invention, this system focuses on applying to autonomous cars, and their identification the system uses the vehicle registration number, furthermore, this solution requires an additional stationary terminal used to operate the bollards.

Polish patent application no. P.424117 describes an intelligent parking bollard, provided with vision and sensory modules, allowing for identification of the vehicle, monitoring the duration of parking, charging and collecting fees, issuing fines in the event of an unpaid fee, as well as sending and receiving data from a communications centre. The system is intended to manage parking spaces, primarily in urban agglomerations. Unlike the present invention, the bollard identifies the vehicle and not the user's smartphone, also not providing for a number of scenarios, such as sharing, managing a parking lot, company parking, etc.

The commercially available Parklio solution is a remotely controlled parking barrier, which can be controlled by an application on a smartphone. The barrier connects with the telephone by means of Bluetooth; it enables integration with parking systems, renting parking spaces by sending a virtual key to other users, and it enables the user to find the parking space. Differences with respect to the present solution exist in terms of network operation, and more precisely, Parklio communication proceeds directly between the barrier and the telephone, without the use of a server, an administration part and a base station of the barriers, which renders it impossible to remotely open the barriers and safely share the parking spaces with other users. Therefore, in the Parklio solution, it is not possible to implement various scenarios of use and billings provided by the present invention, e.g. remote opening of barriers, sharing of a parking space, controlling multiple barriers including controlling various types of barriers, e.g. a bollard in a specific parking space and a boom gate at the entrance to a parking lot in which there are numerous parking spaces.

From prior art, there are also known patent publications such as EP2299409B1, EP2184717B1 or EP315848B1; they describe a number of network solutions related to systems for managing a parking lot, detecting vehicles with a detector of unoccupied spaces, while none of them comprise a parking barrier or a system for automatic control of such a barrier.

### Summary of invention

The invention defines a system and a method according to claims 1 and 10 respectively. Further detailed embodiments are defined in the dependent claims.

### Description of the drawings

The invention will now be presented in more detail in a preferable embodiment, with reference to the attached drawing, in which:

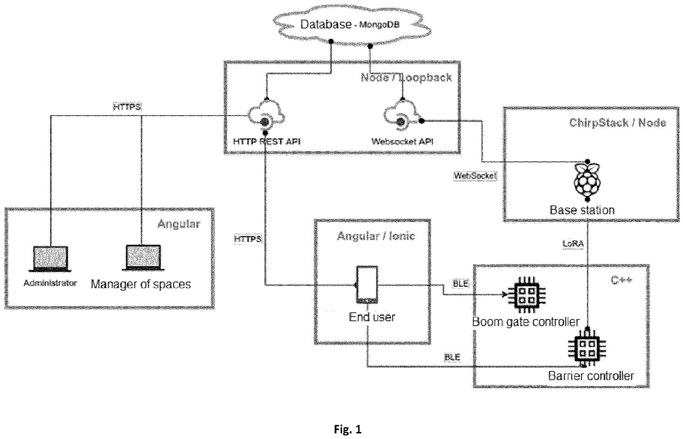

- Fig. 1: Shows the structure of the barrier system and the connection of communication protocols.

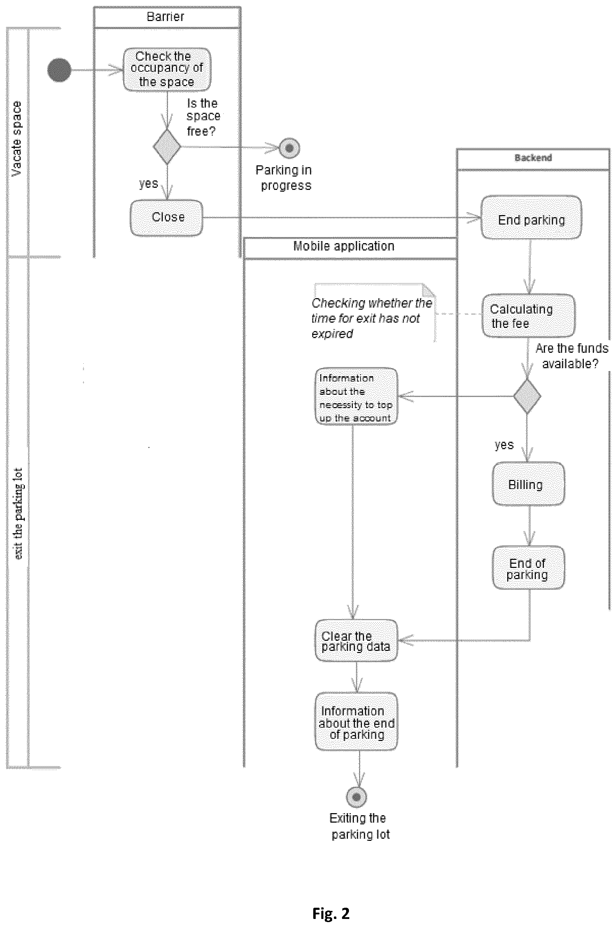

- Fig. 2: Shows a block diagram of a scenario of ending the parking by the end user.

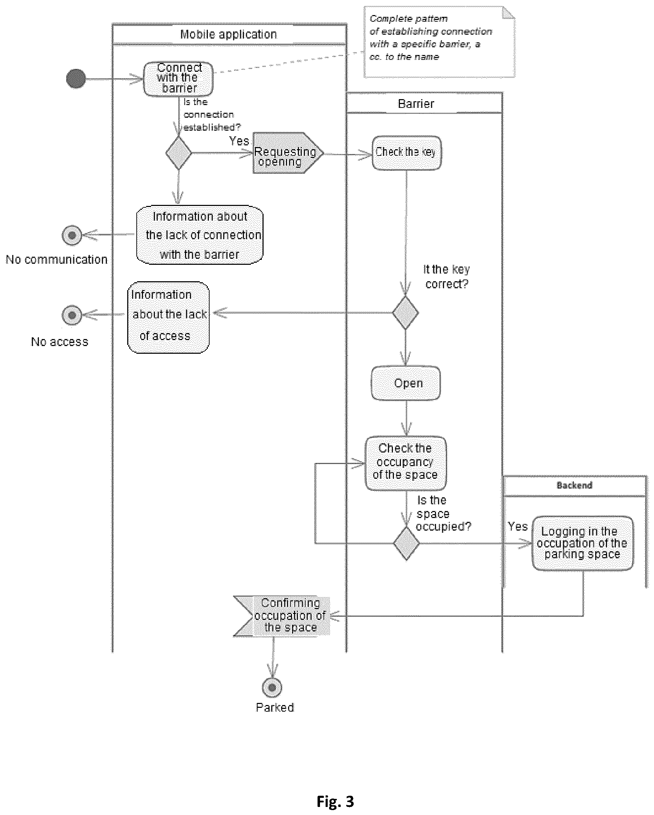

- Fig. 3: Shows a block diagram of a scenario of opening the barrier by the end user.

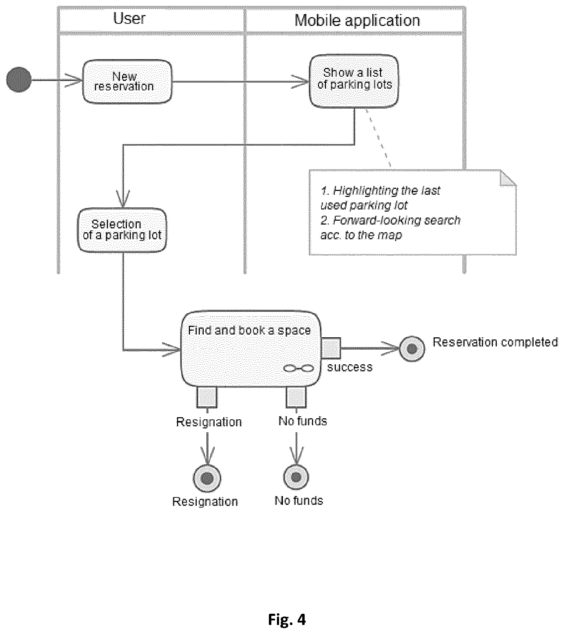

- Fig. 4: Shows a block diagram of a scenario of reserving a parking space.

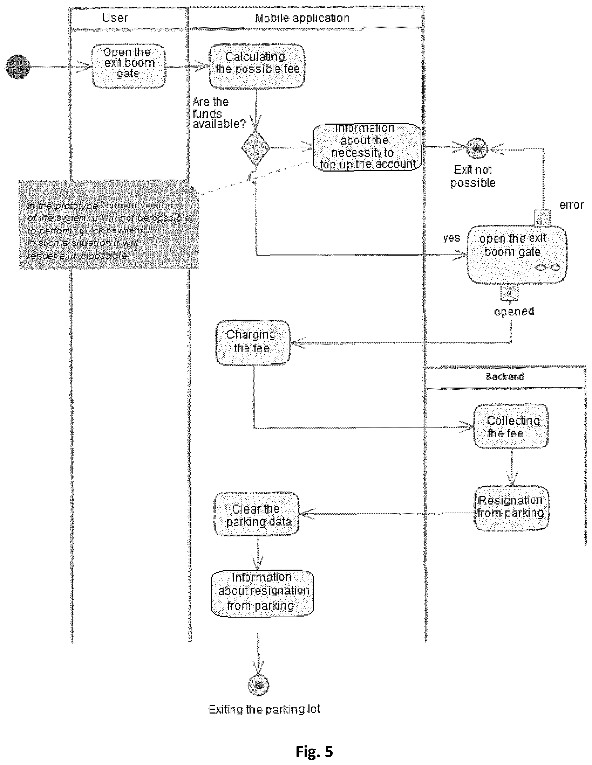

- Fig. 5: Shows a block diagram of a scenario of exiting the parking lot.

### Preferred Embodiment of the invention

In a preferred embodiment, the solution comprises a parking bollard comprising a control system, which enables detection of a vehicle, including detection of occupying a parking space and vacating it, without distinguishing between vehicles. A car is only identified by the user's application, not via a physical marker or identification, due to which the opening of the parking bollard is controlled by detecting the distance of the smartphone with the authorisation, not the vehicle itself. The parking bollard communicates with the client's smartphone, which enables its automatic opening when approached by a client having the authorisation to park. In addition, the system comprises a base station serving to communicate the bollards by a LoRA-type low-power wide-area wireless communication protocol with the Internet, and more precisely with a server in a cloud, where the server is used to store the data of the drivers, companies or organisations, as well as data related to managing a group of parking spaces, their reservation, renting or handing over authorisation by the drivers, companies or organisations. Specifically, the base station is an intermediary in communication, communicating with a bollard (a plurality of bollards) via LoRa, and with the Internet via GSM/LTE/WiFi/Ethernet, or in another standard manner.

The system consists of a series of modules, communicating using various network protocols:

### 1. Database - MongoDB

According to an embodiment, the structure of the database is generated by ORM tools (object-relational mapping). It allows for adding, downloading and converting various types of data, and it enables communication with the base station. It is also possible to use any other relational or nonrelational database.

The database stores data about the drivers and the barriers as well as information about the authorisation of a given driver to change the position of a given barrier. In the database, a driver is identified with a specific user of the system, and they are identified by a unique username in the system. Said authorisation results from one or more of the following events:
- granting authorisation by another driver by means of the driver's application, in particular permanently, for a definite time or once;
- granting authorisation by the administration application, in particular permanently, for a definite time or once;
- the driver's payment for the use of a given parking space;
- granting authorisation by a company or organisation which has authorisation for a group of spaces or barriers;
- granting authorisation by the driver's application or by the administration application for an emergency vehicle, for example a vehicle of rescue services, for example as a result of a telephone call of a driver of such a vehicle to the system administrator;
- the possession of a supertoken by a user, enabling the user's access to any barrier.

Unlike the standard cycle of opening a barrier, where an individual encrypted token established for each barrier is confirmed, a second type of identical tokens present in each barrier is used, allowing the user to unlock any barrier;
- unlocking a parking space made accessible by the manager of, e.g. a service facility, followed by validation of using a given service facility via a beacon or a QR code placed in the given service facility.

In a normal cycle of opening a barrier, there is a secret string, established for each barrier individually and unique (i.e. different for each barrier). This string is used by the server as a key for encrypting a one-time token, and by the barrier to encrypt the same token, and to check whether the result of local encryption (performed by the barrier) and the one received from the server is identical. If it is identical - the same data are encrypted with the same key, which confirms that the barrier and the server share the same secret (key). In the case of a supertoken, we are dealing with a second secret string (second key), embedded in all barriers and identical in all of them. The followed procedure is analogical as in the case of the procedure for normal opening, except the encryption uses this second key, shared between all barriers, and therefore everyone who knows it can open any barrier.

The access to this supertoken (supersecret) is granted analogically to the access to the individual bollards - a given user may simply use it or not (then the authorisation occurs online), or the user may acquire a copy of the second secret key on their own terminal, and then the authorisation occurs offline.

### 2. The server

Activated in a cloud, a server with a REST architecture ( Representational State Transfer); it allows for using the resources and data of a different system as an intermediary in the exchange of data via an API interface (application programming interface) for three applications:
- The end user's (driver's) application - native or PWA
- The administration application - a webpage
- The application of the manager of parking spaces - a webpage

For example, the used server is based on the Loopback 4 framework; however, it is possible to use a server based on another framework. A JSON web token is used to authenticate the users. In addition, the server shares an endpoint in a websocket protocol - used by the base stations. The endpoint software is made in NodeJS.

The server is capable of communicating with at least one portable device, with at least two PCs and at least one base station, this communication working both ways. Communication with the PC and with the end user proceeds by means of an HTTPS protocol. Communication with the base station proceeds by means of a websocket.

### 3. End user software (driver's application)

It is a hybrid application, constructed using IONIC/Angular frameworks. Ultimately compiled to the form of a PWA application, a native application of Android and a native application of iOS; the contents of the page can be downloaded, which enables using the page in the offline mode. Due to the limitations of access to the device for the PWA application, the operating principle of the application is slightly different in the case of a Bluetooth connection with the actions of native applications. The application can operate on any smartphone, tablet and, in the PWA version, on a PC.

The application allows the owner of parking spaces for:
- making a parking space available for other visitors according to rules specified by the owner
- prior reservation of spaces
- managing a user's account, e.g. registering an account, reading the payment history, the status of the account, managing payment channels
- opening a boom gate or a barrier in order to occupy the space
- monitor the duration of parking

The application can also be used by a driver not having a parking space, with the option of:
- renting a space

The application is not intended solely for the owner of the spaces. It can also be used by a driver not having a space - they can rent them. The application does not charge fees - the fees are charged by the server.

### 4. Administrator's software (administration application)

Prepared using Angular. It lacks a fully responsive version, adapted to mobile telephones. The application is operated by the Apache www server. By means of the software, the administrator sees a series of barrier statuses. The application allows for granting authorisation, establishing prices for various users, and remotely opening the barriers, e.g. on demand of emergency vehicles. This allows for implementing several parking scenarios in a single parking lot. Alternatively, the administrator has the ability to control a boom gate blocking a group of parking spaces for groups or individual users. The administrator's application and the driver's application can also be connected and operate on the same hardware, e.g. a smartphone, or they can be completely separate applications, operating on separate hardware. In a typical embodiment, the administration application is installed on a www server, and it is downloaded on the administrator's terminal after entering a proper www page, for the duration of using this page.

### 5. Parking lot manager software

Prepared using Angular. It lacks a fully responsive version, adapted to mobile telephones. The version of the program (full administration interface/managing the parking lot) is selected at the moment of authorisation of the user. The application is operated by the Apache www server.

### 6. Base station software

The base station is based on the ChirpStack system, with which a program written in NodeJS communicates locally using an MQTT protocol. On the other hand, communication with the REST server proceeds using a WebSocket protocol. In addition, the base station comprises a router, using which it communicates with the blocking bollards using a LoRA wireless network.

### 7. Controller software

The controller software is written in the C++ language. The controller program exists in two versions - the one intended for the barrier implements communication both via BluetoothLE (BLE), WiFi or NFC (with the user's application), as well as via wireless standards, such as WiFi, LoRA, ZigBee, Z-wave, LTE-M, NB-IOT and wired LAN networks, and in particular via Ethernet (with the base station).

### 8. Parking space barrier

The barrier can be bollards, boom gates, spike strips, gates or other similar methods for mechanically stopping a vehicle against unauthorised entry. They can be powered by batteries, accumulators or in a wired manner. Said barriers can communicate exclusively with the end user by means of BluetoothLE, and with the base station via LoRa, Bluetooth, BluetoothLE, ZigBee, Z-wave, LTE-M, NB-IOT or WiFi. It is also possible for the barrier to communicate with the base station by means of wired communication, e.g. by means of Ethernet. In addition, the barriers are provided with mechanisms allowing for automatic detection of an approaching vehicle and automatic marking of the end of parking when receiving information by a vehicle presence sensor, which can be, e.g. a laser, ultrasound or optical sensor. The barrier can also have a system for detecting an attempt to force the barrier open, which system in the case of such an attempt communicates with the base station and/or with the driver's terminal, and optionally via them with the administration application (administrator), the owner of the parking space or the server, informing them about such an attempt.

Control of the described parking space barrier proceeds according to the following steps.
- a user who wants to unlock the barrier sends a request to open the parking space barrier from the driver's terminal, for example a telephone application.
- the parking space barrier sends a one-time token to the driver's terminal,
- the driver's terminal hands over the token to the server for its encryption,
- the server checks the user's authorisation for a given space (whether the space has been purchased, whether the user has authorisation for it, whether access has been provided to the user, etc.),
- the server encrypts the token, and subsequently returns the token to the user's smartphone,
- the telephone hands over the encrypted token to the parking space barrier,
- the parking space barrier encrypts the original form of the token,
- the original form of the token is compared to the token received by the driver's terminal,
- in the event of compliance of tokens, the parking space barrier is opened.

As mentioned above, the user can receive and grant authorisation to other users by the function of providing access, sharing, granting authorisation permanently and/or reservation of the parking space.

Alternatively, the parking space barrier can be controlled in the following manner
- sending a request to open the parking space barrier by the server to the base station
- sending a request to open the parking space barrier by the base station to the parking space barrier
- opening the parking space barrier

Another alternative method, not claimed in the present application, for controlling the parking space barrier for communication without the use of a server comprises the following steps
- sharing the barrier secret with the driver's terminal by the server for the duration of this driver's access of authorisation for the barrier
- sending a request to open the parking space barrier from the driver's terminal to said barrier
- generating a one-time token by the parking space barrier
- sending the one-time token to the driver's terminal by the barrier
- encrypting the token by the driver's terminal using a key created from the secret of the barrier
- handing over the encrypted token to the parking space barrier by the parking space barrier
- encrypting the original form of the token by the parking space barrier, using the key created from the secret of the barrier
- comparing, by the parking space barrier, the encrypted original form of the token with the encrypted token received from the driver's terminal
- in the case of compliance of both tokens, unlocking the barrier.

Alternatively, the token and the secret can also be connected to each other (concatenation of the token and the secret), transforming the produced resulting series of bytes by the selected cryptographic hash function - in particular: calculate the value of the selected hash function for a series of bytes in the form of the concatenated token and secret. The hashes produced in the server/driver's terminal and in the application can be compared. Then a hash transmission can be put wherever the transmission of the encrypted token occurs. In both cases, functionality and the level of safety are the same.

## Claims

1. A system for controlling a parking space barrier, which comprises:
- at least one parking space barrier, comprising a system for changing the position of the barrier in order to control the possibility for the parking space to be entered by a vehicle, a system for detecting the presence of a vehicle in the parking space, a system for communicating the barrier with a driver's terminal, a system for communicating the barrier with a base station and a computing device,
- the base station, which comprises a system for communicating the base station with the barrier and a system for communicating the base station with a server,
- the server, configured and intended to manage one or more parking space barriers, having access to a database which stores at least data about drivers, the company or organisation
and the barriers, as well as information about the authorisation of a given driver to change the position of a given barrier, and further provided with a system for communicating the server with a driver's application, a system for communicating the server with an administration application and a system for communicating the server with the base station,
- a driver's application, installed on a driver's terminal, which is preferably a smartphone, a tablet or a computer, enabling communication with the barrier and with the server,
- an administration application, configured and intended to operate the parking barriers and manage the drivers' authorisation to change the position of the parking barriers, preferably operating on an administrator's terminal, especially a computer, a tablet or a smartphone, using a www application,
and wherein the system is configured to perform the following steps:
- assigning each barrier provided with a computing device a secret string and saving this string in the barrier and on the server,
- on the user's request to change the position of the barrier, sending a token from the barrier to the server, by means of the driver's terminal,
- checking, by the server in the database, the authorisation to change the position of the given barrier, and in the case of confirming this authorization encrypting the token by the server using said secret string as an encrypting key, or calculating, by the server, a hash function setpoint for a series of symbols comprising the token and said secret string,
- encrypting the same token by the barrier using said secret string as an encrypting key, or calculating, by the barrier, the hash function setpoint for a string comprising the token and said secret string,
- providing the barrier with the token encrypted or the calculated hash function setpoint by the server, preferably by means of the driver's terminal,
- checking by the barrier whether the result of the encryption performed by the barrier and the encryption performed by the server is identical, by comparing tokens encrypted by the server and encrypted by the barrier, or by comparing the hash function setpoint calculated by the server and calculated by the barrier for the same secret and the same token, and if so,
- changing the position of the barrier in order to enable the entry of a vehicle into the parking space.

2. The system according to claim 1, **characterised in that** the barrier is a bollard, a boom gate, a spike strip, a barricade or a gate.

3. The system according to claim 1 or 2, **characterised in that** the system for detecting a vehicle in the parking space comprises a laser, ultrasound, radar or optical sensor.

4. The system according to claim 1, 2 or 3, **characterised in that** the barrier system for communicating with the driver's terminal is configured for wireless communication, especially using a Bluetooth protocol, near-field communication, NFC, or a wireless computer network , WiFi.

5. The system according to claim 1, 2, 3 or 4, **characterised in that** the barrier system for communication with the base station is configured to communicate by means of a wireless communication standard, in particular low-power wide-area communication, LoRa, Bluetooth, ZigBee, Z-wave, LTE-M, NB-IOT or WiFi.

6. The system according to any of the claims from 1 to 5, **characterised in that** the server is software capable of working on a traditional server, on a virtual host in a cloud, or as a dispersed service utilising a PAAS cloud platform, Platform As A Service.

7. The system according to any of the claims from 1 to 6, **characterised in that** the administration application is placed on a www server, and the administrator's terminal is configured to download the application after entering a correct www page for the duration of using this page.

8. The system according to any of the claims from 1 to 7, **characterised in that** the barrier additionally has a system for detecting an attempt at forcing the barrier open, preferably configured to send information about such an event to the base station and/or to the driver's terminal.

9. The system according to any of the claims from 1 to 8, **characterised in that** it comprises a system for detecting an attempt at forcing the barrier open, which system is configured to communicate with the server, the barrier's owner or the administrator, informing them about such an attempt.

10. A method for controlling a parking space barrier in the system according to any of the preceding claims from 1 to 9, which method comprises the following steps:
- assigning each barrier provided with a computing device a secret string and saving this string in the barrier and on the server,
- on the user's request to change the position of the barrier, sending a token from the barrier to the server, by means of the driver's terminal,
- checking, by the server in the database, the authorisation to change the position of the given barrier, and in the case of confirming this authorization encrypting the token by the server using said secret string as an encrypting key, or calculating, by the server, a hash function setpoint for a series of symbols comprising the token and said secret string,
- encrypting the same token by the barrier using said secret string as an encrypting key, or calculating, by the barrier, the hash function setpoint for a string comprising the token and said secret string,
- providing the barrier with the token encrypted or the calculated hash function setpoint by the server, preferably by means of the driver's terminal,
- checking by the barrier whether the result of the encryption performed by the barrier and the encryption performed by the server is identical, by comparing tokens encrypted by the server and encrypted by the barrier, or by comparing the hash function setpoint calculated by the server and calculated by the barrier for the same secret and the same token, and if so,
- changing the position of the barrier in order to enable the entry of a vehicle into the parking space.

11. The method according to claim 10, **characterised in that** the token is a one-time token, said secret string is unique and different for each barrier, while the method comprises the following steps:
- sending a request to open the parking space barrier from the driver's terminal to said barrier,
- sending a one-time token from the parking space barrier to the driver's terminal,
- handing over this token by the driver's terminal to the server for its encryption,
- checking, by the server in the database, the authorisation of a given driver to change the position of a given barrier, and in the case of confirming this authorisation:
- encrypting this token by the server using said secret string as an encrypting key, or calculating, by the server, the hash function setpoint for a string comprising the token and said secret string,
- returning this encrypted token or the calculated hash function setpoint by the server to the driver's terminal,
- handing over this encrypted token or the calculated hash function setpoint by the driver's terminal to the parking space barrier,
- encrypting the original form of the token by the parking space barrier, using said secret string as an encrypting key, or calculating, by the barrier, the hash function setpoint for a string comprising the token and said secret string,
- comparing, by the parking space barrier, the form of the token encrypted by the barrier with the encrypted form of the token received from the server via the driver's terminal, or the hash function setpoint calculated by the server and calculated by the barrier for the same secret and the same token,
- in the event of compliance of these forms or compliance of the hash function setpoints - changing the position of the barrier in order to enable the entry of a vehicle into the parking space.

12. The method according to claim 10, **characterised in that** it additionally comprises the following steps:
- sending a request to open the parking space barrier by the server to the base station,
- sending a request to open the parking space barrier by the base station to the parking space barrier,
- changing the position of the barrier in order to enable the entry of a vehicle into the parking space.

13. The method according to claim 10, 11 or 12, **characterised in that,** in the database which stores at least the data about drivers and the barriers as well as information about the authorisation of a given driver to change the position of a given barrier, said authorisation results from one or more of the following events: granting authorisation by another driver by means of the driver's application, in particular permanently, for a definite time or once; granting authorisation by the administration application, in particular permanently, for a definite time or once; the driver's paying for the use of a given parking space; granting authorisation by the driver's application or by the administration application, or by means of a supertoken, for an emergency vehicle, for example a vehicle of rescue services, by a company or organisation which has authorisation for a group of sites or barriers.

14. The method according to claim 10, 11, 12 or 13, **characterised in that** it additionally comprises the parking validation step, involving the confirmation of the physical presence of the driver in a specified location, for example in a shop or in a service company, by photographing a QR code placed in this location, or by receiving a signal from a beacon placed in this location by the driver's terminal.

## Patentansprüche

1. Ein System zur Steuerung einer Parkplatzschranke, das Folgendes umfasst:
- mindestens eine Parkplatzschranke, die ein System zum Verändern der Position der Schranke umfasst, um die Möglichkeit zu steuern, dass ein Fahrzeug in den Parkplatz einfahren kann, ein System zum Erkennen der Anwesenheit eines Fahrzeugs in dem Parkplatz, ein System zum Kommunizieren der Schranke mit einem Fahrerterminal, ein System zum Kommunizieren der Schranke mit einer Basisstation und eine Rechenvorrichtung,
- die Basisstation, die ein System zur Kommunikation der Basisstation mit der Schranke und ein System zur Kommunikation der Basisstation mit einem Server umfasst,
- wobei der Server, der für die Verwaltung einer oder mehrerer Parkplatzschranken konfiguriert und bestimmt ist, Zugang zu einer Datenbank hat, in der mindestens Daten über die Fahrer, das Unternehmen oder die Organisation
und die Schranken, sowie Informationen über die Berechtigung eines bestimmten Fahrers, die Position einer bestimmten Schranke zu verändern, gespeichert werden, und außerdem mit einem System zur Kommunikation des Servers mit einer Fahrer-App, einem System zur Kommunikation des Servers mit einer Verwaltungs-App und einem System zur Kommunikation des Servers mit der Basisstation ausgestattet ist,
- eine Fahrer-App, die auf einem Endgerät des Fahrers, vorzugsweise einem Smartphone, einem Tablet oder einem Computer, installiert ist und die Kommunikation mit der Schranke und dem Server ermöglicht,
- eine Verwaltungs-App, die so konfiguriert und bestimmt ist, dass sie die Parkschranken bedient und die Berechtigung der Fahrer verwaltet, die Position der Parkschranken zu ändern, und die vorzugsweise auf einem Verwalterterminal, insbesondere einem Computer, einem Tablet oder einem Smartphone, unter Verwendung einer online App arbeitet,
und wobei das System so konfiguriert ist, dass es die folgenden Schritte durchführt:
- jeder mit einem Computer ausgestatteten Schranke eine geheime Zeichenfolge zuzuweisen und diese Zeichenfolge in der Schranke und auf dem Server zu speichern,
- auf Anfrage des Benutzers, die Position der Schranke zu ändern, Senden eines Tokens von der Schranke an den Server über das Terminal des Fahrers,
- Prüfung der Berechtigung zur Änderung der Position der gegebenen Schranke durch den Server in der Datenbank und im Falle der Bestätigung dieses Berechtigungsverschlüsselungstokens durch den Server unter Verwendung der geheimen Zeichenfolge als Verschlüsselungsschlüssel oder Berechnung durch den Server,
Sollwert der Hash-Funktion
für eine Reihe von Symbolen, die das Token und die geheime Zeichenfolge enthalten,
- Verschlüsselung desselben Tokens durch die Schranke unter Verwendung der geheimen Zeichenfolge als Verschlüsselungsschlüssel oder Berechnung des Sollwerts der Hash-Funktion für eine Zeichenfolge, die den Token und die geheime Zeichenfolge enthält, durch die Schranke,
- Bereitstellung des verschlüsselten Tokens oder des berechneten HashFunktionssollwerts durch den Server an die Schranke, vorzugsweise über das Terminal des Fahrers,
- Prüfen durch die Schranke, ob das Ergebnis der von der Schranke durchgeführten Verschlüsselung und der vom Server durchgeführten Verschlüsselung identisch ist, indem die vom Server verschlüsselten Token und die von der Schranke verschlüsselten Token verglichen werden, oder indem der vom Server berechnete und der von der Schranke berechnete Hashfunktionssollwert für dasselbe Geheimnis und dasselbe Token verglichen werden, und wenn ja,
- Verändern der Position der Schranke, um die Einfahrt eines Fahrzeugs in den Parkplatz zu ermöglichen.

2. Das System nach Anspruch 1, **dadurch gekennzeichnet, dass** die Schranke ein Poller, eine Schranke, ein Stachelstreifen, eine Barrikade oder ein Tor ist.

3. Das System nach Anspruch 1 oder 2, **dadurch gekennzeichnet, dass** das System zur Erkennung eines Fahrzeugs in der Parklücke einen Laser-, Ultraschall-, Radar- oder optischen Sensor umfasst.

4. System nach Anspruch 1, 2 oder 3, **dadurch gekennzeichnet, dass** das Schrankensystem zur Kommunikation mit dem Fahrerterminal für eine drahtlose Kommunikation konfiguriert ist, insbesondere unter Verwendung eines Bluetooth-Protokolls, Nahfeldkommunikation, NFC, oder eines drahtlosen Computernetzwerks WiFi.

5. System nach Anspruch 1, 2, 3 oder 4, **dadurch gekennzeichnet, dass** das Schrankensystem für die Kommunikation mit der Basisstation so konfiguriert ist, dass es über einen drahtlosen Kommunikationsstandard kommuniziert, insbesondere über Low-Power-Wide-Area-Communication LoRa, Bluetooth, ZigBee, Z-wave, LTE-M, NB-IOT oder WiFi.

6. Das System nach einem der Ansprüche 1 bis 5, **dadurch gekennzeichnet, dass** der Server eine Software ist, die auf einem herkömmlichen Server, auf einem virtuellen Host in einer Cloud oder als verteilter Dienst unter Verwendung einer PAAS-Cloud-Plattform (Platform As A Service) arbeiten kann.

7. System nach einem der Ansprüche 1 bis 6, **dadurch gekennzeichnet, dass** die Verwaltungs-App auf einem online Server platziert ist und das Terminal des Verwalters so konfiguriert ist, dass es die App nach Eingabe einer korrekten Website für die Dauer der Nutzung dieser Seite herunterlädt.

8. Das System nach einem der Ansprüche 1 bis 7, **dadurch gekennzeichnet, dass** die Schranke zusätzlich über ein System zur Erkennung eines Versuchs, die Schranke gewaltsam zu öffnen, verfügt, das vorzugsweise so konfiguriert ist, dass es Informationen über ein solches Ereignis an die Basisstation und/oder an das Fahrerterminal sendet.

9. System nach einem der Ansprüche 1 bis 8, **dadurch gekennzeichnet, dass** es ein System zur Erkennung eines Versuchs, die Schranke gewaltsam zu öffnen, umfasst, das so konfiguriert ist, dass es mit dem Server, dem Eigentümer der Schranke oder dem Verwalter kommuniziert und sie über einen solchen Versuch informiert.

10. Verfahren zur Steuerung einer Parkplatzschranke in dem System nach einem der vorhergehenden Ansprüche 1 bis 9, wobei das Verfahren die folgenden Schritte umfasst:
- jeder mit einem Computer ausgestatteten Schranke eine geheime Zeichenfolge zuzuweisen und diese Zeichenfolge in der Schranke und auf dem Server zu speichern,
- auf Anfrage des Benutzers, die Position der Schranke zu ändern, Senden eines Tokens von der Schranke an den Server über das Terminal des Fahrers,
- Prüfung der Berechtigung zur Änderung der Position der gegebenen Schranke durch den Server in der Datenbank und im Falle der Bestätigung dieses Berechtigungsverschlüsselungstokens durch den Server unter Verwendung der geheimen Zeichenfolge als Verschlüsselungsschlüssel oder Berechnung durch den Server des Hashfunktionssollwerts
für eine Reihe von Symbolen, die das Token und die geheime Zeichenfolge enthalten,
- Verschlüsselung desselben Tokens durch die Schranke unter Verwendung der geheimen Zeichenfolge als Verschlüsselungsschlüssel oder Berechnung des Sollwerts der Hash-Funktion für eine Zeichenfolge, die den Token und die geheime Zeichenfolge enthält, durch die Schranke,
- Bereitstellung des verschlüsselten Tokens oder des berechneten HashFunktionssollwerts durch den Server an die Schranke, vorzugsweise über das Terminal des Fahrers,
- Prüfen durch die Schranke, ob das Ergebnis der von der Schranke durchgeführten Verschlüsselung und der vom Server durchgeführten Verschlüsselung identisch ist, indem die vom Server verschlüsselten Token und die von der Schranke verschlüsselten Token verglichen werden, oder indem der vom Server berechnete und der von der Schranke berechnete Hashfunktionssollwert für dasselbe Geheimnis und dasselbe Token verglichen werden, und wenn ja,
- Verändern der Position der Schranke, um die Einfahrt eines Fahrzeugs in den Parkplatz zu ermöglichen.

11. Verfahren nach Anspruch 10, **dadurch gekennzeichnet, dass** das Token ein einmaliges Token ist, die geheime Zeichenfolge eindeutig und für jede Schranke unterschiedlich ist, wobei das Verfahren die folgenden Schritte umfasst:
- Senden einer Anfrage zum Öffnen der Parkplatzschranke vom Terminal des Fahrers an die Schranke,
- Senden eines einmaligen Tokens von der Parkplatzschranke an das Terminal des Fahrers,
- Übergabe dieses Tokens durch das Terminal des Fahrers an den Server zu dessen Verschlüsselung,
- Überprüfung der Berechtigung eines bestimmten Fahrers, die Position einer bestimmten Schranke zu ändern, durch den Server in der Datenbank und im Falle der Bestätigung dieser Berechtigung:
- Verschlüsselung des Tokens durch den Server unter Verwendung der geheimen Zeichenfolge als Verschlüsselungsschlüssel oder Berechnung des Sollwerts der Hash-Funktion für eine Zeichenfolge, die den Token und die geheime Zeichenfolge enthält, durch die Schranke,
- Rücksendung dieses verschlüsselten Tokens oder des berechneten Hashfunktionssollwerts durch den Server an das Terminal des Fahrers,
- die Übergabe dieses verschlüsselten Tokens oder des berechneten Hashfunktionssollwerts durch das Terminal des Fahrers an die Parkplatzschranke,
- Verschlüsseln der ursprünglichen Form des Tokens durch die Parkplatzschranke unter Verwendung der geheimen Zeichenfolge als Verschlüsselungsschlüssel oder Berechnung des Sollwerts der Hash-Funktion für eine Zeichenfolge, die den Token und die geheime Zeichenfolge enthält, durch die Schranke,
- Vergleich der von der Schranke verschlüsselten Form des Tokens mit der vom Server über das Terminal des Fahrers empfangenen verschlüsselten Form des Tokens oder des vom Server berechneten und von der Schranke berechneten Hashfunktionssollwerts für dasselbe Geheimnis und denselben Token durch die Parkplatzschranke,
- im Falle der Übereinstimmung dieser Formen oder der Übereinstimmung der Hashfunktionssollwerte - das Ändern der Position der Schranke, um die Einfahrt eines Fahrzeugs in den Parkplatz zu ermöglichen.

12. Das Verfahren nach Anspruch 10, **dadurch gekennzeichnet, dass** es zusätzlich die folgenden Schritte umfasst:
- Senden einer Aufforderung zum Öffnen der Parkplatzschranke durch den Server an die Basisstation,
- Senden einer Aufforderung zum Öffnen der Parkplatzschranke durch die Basisstation an die Parkplatzschranke,
- Verändern der Position der Schranke, um die Einfahrt eines Fahrzeugs in den Parkplatz zu ermöglichen.

13. Verfahren nach Anspruch 10, 11 oder 12, **dadurch gekennzeichnet, dass** in der Datenbank, die zumindest die Daten über die Fahrer und die Schranken sowie Informationen über die Autorisierung eines bestimmten Fahrers zur Änderung der Position einer bestimmten Schranke speichert, die Autorisierung aus einem oder mehreren der folgenden Ereignisse resultiert: Erteilung einer Genehmigung durch einen anderen Fahrer mittels der Fahrer-App, insbesondere dauerhaft, für eine bestimmte Zeit oder einmalig; Erteilung einer Genehmigung durch die Verwaltungs-App, insbesondere dauerhaft, für eine bestimmte Zeit oder einmalig; Zahlung des Fahrers für die Nutzung eines bestimmten Parkplatzes; Erteilung einer Genehmigung durch die Fahrer-App oder durch die Verwaltungs-App oder mittels eines Supertokens für ein Einsatzfahrzeug, zum Beispiel ein Fahrzeug der Rettungsdienste, durch ein Unternehmen oder eine Organisation, das/die eine Genehmigung für eine Gruppe von Stellplätzen oder Schranken besitzt.

14. Verfahren nach Anspruch 10, 11, 12 oder 13, **dadurch gekennzeichnet, dass** es zusätzlich den Schritt der Parkvalidierung umfasst, der die Bestätigung der physischen Anwesenheit des Fahrers an einem bestimmten Ort, zum Beispiel in einem Geschäft oder einem Dienstleistungsunternehmen, durch Fotografieren eines an diesem Ort platzierten QR-Codes oder durch Empfangen eines Signals von einer an diesem Ort platzierten Signalisierungseinrichtung durch das Terminal des Fahrers umfasst.

## Revendications

1. Un système de contrôle d'une barrière de place de parking, qui comprend :
- au moins une barrière de place de parking, comprenant un système pour changer la position de la barrière afin de contrôler la possibilité pour un véhicule d'entrer dans la place de parking, un système pour détecter la présence d'un véhicule dans la place de parking, un système pour communiquer la barrière avec un terminal du conducteur, un système pour communiquer la barrière avec une station de base et un dispositif informatique,
- la station de base, qui comprend un système pour communiquer la station de base avec la barrière et un système pour communiquer la station de base avec un serveur,
- le serveur, configuré et destiné à gérer une ou plusieurs barrières de place de parking, ayant accès à une base de données qui stocke au moins
des données sur les conducteurs, l'entreprise ou l'organisation
et les barrières, ainsi que des informations sur l'autorisation d'un conducteur donné à modifier la position d'une barrière donnée, et équipé en outre d'un système pour communiquer le serveur avec une application pour conducteur, d'un système pour communiquer le serveur avec une application d'administration et d'un système pour communiquer le serveur avec la station de base,
- une application pour conducteur, installée sur un terminal du conducteur, qui est de préférence un smartphone, une tablette ou un ordinateur, permettant de communiquer avec la barrière et avec le serveur,
- une application d'administration, configurée et destinée à faire fonctionner les barrières de parking et à gérer les autorisations des conducteurs à modifier la position des barrières de parking, fonctionnant de préférence sur un terminal d'administrateur, notamment un ordinateur, une tablette ou un smartphone, à l'aide d'une application www,
et dans lequel le système est configuré pour effectuer les étapes suivantes :
- l'attribution d'une chaîne secrète à chaque barrière équipée d'un dispositif informatique et l'enregistrement de cette chaîne dans la barrière et sur le serveur,
- à la demande de l'utilisateur de modifier la position de la barrière, l'envoi d'un token depuis la barrière vers le serveur, par l'intermédiaire du terminal du conducteur,
- la vérification, par le serveur dans la base de données, de l'autorisation à modifier la position de la barrière donnée et, en cas de confirmation de cette autorisation, le cryptage du token par le serveur en utilisant
ladite chaîne secrète comme clé de cryptage, ou le calcul, par le serveur,
de la consigne de fonction de hachage
pour une série de symboles comprenant le token et ladite chaîne secrète,
- le cryptage du même token par la barrière en utilisant ladite chaîne secrète comme clé de cryptage, ou le calcul, par la barrière, de la consigne de fonction de hachage pour une chaîne comprenant le token et ladite chaîne secrète,
- la fourniture à la barrière du token crypté ou de la consigne de fonction de hachage calculée par le serveur, de préférence au moyen du terminal du conducteur,
- la vérification par la barrière si le résultat du cryptage effectué par la barrière et le cryptage effectué par le serveur est identique, en comparant les tokens cryptés par le serveur et cryptés par la barrière, ou en comparant la consigne de la fonction de hachage calculée par le serveur et calculée par la barrière pour le même secret et le même token, et si oui, - la modification de la position de la barrière afin de permettre l'entrée d'un véhicule dans la place de parking.

2. Le système selon la revendication 1, **caractérisé en ce que** la barrière est un bollard, une barrière à flèche, une herse, une barricade ou un portail.

3. Le système selon la revendication 1 ou 2, **caractérisé en ce que** le système pour détecter un véhicule dans la place de parking comprend un laser, un ultrason, un radar ou un capteur optique.

4. Le système selon la revendication 1, 2 ou 3, **caractérisé en ce que** le système de barrière pour communiquer avec le terminal du conducteur est configuré pour une communication sans fil, notamment en utilisant un protocole Bluetooth, une communication en champ proche, NFC, ou un réseau informatique sans fil WiFi.

5. Le système selon la revendication 1, 2, 3 ou 4, **caractérisé en ce que** le système de barrière pour communiquer avec la station de base est configuré pour communiquer au moyen d'un standard de communication sans fil, notamment de communication étendue à basse consommation LoRa, Bluetooth, ZigBee, Z-wave, LTE-M, NB-IOT ou WiFi.

6. Le système selon l'une des revendications 1 à 5, **caractérisé en ce que** le serveur est un logiciel capable de fonctionner sur un serveur traditionnel, sur un hôte virtuel dans un cloud, ou en tant que service dispersé utilisant une plateforme cloud PAAS, Platform As A Service.

7. Le système selon l'une des revendications 1 à 6, **caractérisé en ce que** l'application d'administration est installée sur un serveur www, et le terminal de l'administrateur est configuré pour télécharger l'application après avoir accédé à une page www correcte pendant la durée d'utilisation de cette page.

8. Le système selon l'une des revendications 1 à 7, **caractérisé en ce que** la barrière a en outre un système pour détecter une tentative de forcer à ouvrir la barrière, de préférence configuré pour envoyer des informations sur un tel événement à la station de base et/ou au terminal du conducteur.

9. Le système selon l'une des revendications 1 à 8, **caractérisé en ce qu'**il comprend un système pour détecter une tentative de forcer à ouvrir la barrière, lequel système est configuré pour communiquer avec le serveur, le propriétaire ou l'administrateur de la barrière, en les informant d'une telle tentative.

10. Un procédé de contrôle d'une barrière de place de parking dans le système selon l'une quelconque des revendications précédentes de 1 à 9, lequel procédé comprend les étapes suivantes :
- l'attribution d'une chaîne secrète à chaque barrière équipée d'un dispositif informatique et l'enregistrement de cette chaîne dans la barrière et sur le serveur,
- à la demande de l'utilisateur de modifier la position de la barrière, l'envoi d'un token depuis la barrière vers le serveur, par l'intermédiaire du terminal du conducteur,
- la vérification, par le serveur dans la base de données, de l'autorisation à modifier la position de la barrière donnée et, en cas de confirmation de cette autorisation, le cryptage du token par le serveur en utilisant
ladite chaîne secrète comme clé de cryptage, ou le calcul, par le serveur, de la consigne de fonction de hachage
pour une série de symboles comprenant le token et ladite chaîne secrète,
- le cryptage du même token par la barrière en utilisant ladite chaîne secrète comme clé de cryptage, ou le calcul, par la barrière, de la consigne de fonction de hachage pour une chaîne comprenant le token et ladite chaîne secrète,
- la fourniture à la barrière du token crypté ou de la consigne de fonction de hachage calculée par le serveur, de préférence au moyen du terminal du conducteur,
- la vérification par la barrière si le résultat du cryptage effectué par la barrière et le cryptage effectué par le serveur est identique, en comparant les tokens cryptés par le serveur et cryptés par la barrière, ou en comparant la consigne de la fonction de hachage calculée par le serveur et calculée par la barrière pour le même secret et le même token, et si oui,
- la modification de la position de la barrière afin de permettre l'entrée d'un véhicule dans la place de parking.

11. Le procédé selon la revendication 10, **caractérisé en ce que** le token est un token à usage unique, ladite chaîne secrète est unique et différente pour chaque barrière, tandis que le procédé comprend les étapes suivantes :
- l'envoi d'une demande d'ouverture de la barrière de place de parking depuis le terminal du conducteur vers ladite barrière,
- l'envoi d'un token à usage unique depuis la barrière de place de parking jusqu'au terminal du conducteur,
- la remise de ce token par le terminal du conducteur au serveur pour son cryptage,
- la vérification, par le serveur dans la base de données, de l'autorisation d'un conducteur donné à modifier la position d'une barrière donnée et, en cas de confirmation de cette autorisation :
- le cryptage de ce token par le serveur en utilisant ladite chaîne secrète comme clé de cryptage, ou le calcul, par le serveur, de la consigne de fonction de hachage pour une chaîne comprenant le token et ladite chaîne secrète,
- le renvoi au terminal du conducteur de ce token crypté ou de la consigne de fonction de hachage calculée par le serveur,
- la remise de ce token crypté ou de la consigne de fonction de hachage calculée par le terminal du conducteur à la barrière de place de parking,
- le cryptage de la forme originale du token par la barrière de place de parking en utilisant ladite chaîne secrète comme clé de cryptage, ou le calcul, par la barrière, de la consigne de fonction de hachage pour une chaîne comprenant le token et ladite chaîne secrète,
- la comparaison, par la barrière de place de parking, de la forme du token crypté par la barrière avec la forme cryptée du token reçu du serveur via le terminal du conducteur, ou de la consigne de fonction de hachage calculée par le serveur et calculée par la barrière pour le même secret et le même token,
- en cas de conformité avec ces formes ou de conformité avec les consignes de fonction de hachage - la modification de la position de la barrière afin de permettre l'entrée d'un véhicule dans la place de parking.

12. Le procédé selon la revendication 10, **caractérisé en ce qu'**il comprend en outre les étapes suivantes :
- l'envoi d'une demande d'ouverture de la barrière de place de parking par le serveur vers la station de base,
- l'envoi d'une demande d'ouverture de la barrière de place de parking par la station de base vers la barrière de place de parking,
- la modification de la position de la barrière afin de permettre l'entrée d'un véhicule dans la place de parking.

13. Le procédé selon la revendication 10, 11 ou 12, **caractérisé en ce que**, dans la base de données qui stocke au moins les données sur les conducteurs et les barrières ainsi que les informations sur l'autorisation d'un conducteur donné à modifier la position d'une barrière donnée, cette autorisation résulte d'un ou de plusieurs des événements suivants : l'octroi d'une autorisation par un autre conducteur au moyen de l'application du conducteur, en particulier de manière permanente, pour une durée déterminée ou une seule fois ; l'octroi d'une autorisation par l'application d'administration, en particulier de manière permanente, pour une durée déterminée ou une seule fois ; le paiement par le conducteur pour l'utilisation d'une place de parking donnée ; l'octroi d'une autorisation par l'application du conducteur ou par l'application d'administration, ou au moyen d'un supertoken, pour un véhicule d'intervention d'urgence, par exemple un véhicule des services de secours, par une entreprise ou une organisation qui dispose d'une autorisation pour un groupe de sites ou de barrières.

14. Le procédé selon la revendication 10, 11, 12 ou 13, **caractérisé en ce qu'**il comprend en outre l'étape de validation de parking, impliquant la confirmation de la présence physique du conducteur dans un lieu spécifié, par exemple dans un magasin ou dans une entreprise de services, en photographiant un code QR placé dans ce lieu, ou en recevant un signal d'une balise placée dans ce lieu par le terminal du conducteur.
